# DEMANDE DE BREVET EUROPEEN

(11) **EP 4 841 485 A1**
(43) Date de publication de la demande: **18.11.2026**
(21) Numéro de dépôt: 26178355.9
(22) Date de dépôt: 12.05.2026
(51) Int. Cl.: G06F 21/10, G06F 21/16, G06N 3/08, G06F 21/14, G06N 3/045

(54) **PROCÉDÉ POUR PROTÉGER PAR TRAÇAGE UN RÉSEAU ARTIFICIEL DE NEURONES**

(30) Priorité: 13.05.2025 FR 2505074
(71) Demandeur: Institut Mines-Télécom, 91120 Palaiseau (FR)
(72) Inventeur: DE SOUSA TRIAS, Carl Enric, 64210 BIDART (FR); MITREA, Mihai-Petru, 92330 SCEAUX (FR); TARTAGLIONE, Enzo, 91300 MASSY (FR); CHAUDHURI, Sumanta, 91190 Gif-Sur-Yvette (FR)
(74) Mandataire: Ipsilon

(57) **Abrégé**

Procédé pour protéger par traçage un réseau artificiel de neurones, ledit réseau comportant une pluralité de couches, comprenant chacune une pluralité de neurones, lesdits neurones comportant une pluralité de paramètres ayant chacun une valeur, le procédé comportant au moins les étapes suivantes :
a) sélectionner une sous-partie des paramètres dans au moins une ou plusieurs couches du réseau, notamment dans chacune des couches du réseau,
b) lors d'une étape requise pour le traçage du réseau, durant son entrainement, substituer la valeur des paramètres sélectionnés à l'étape a) par au moins une marque prédéterminée *W_{X}* pour marquer le réseau, ou
relever les valeurs des paramètres sélectionnés afin de former une empreinte *W_{X}* pour réaliser l'empreinte numérique du réseau,
c) poursuivre l'entrainement du réseau indépendamment des modifications de l'étape b) effectuées en vue du traçage,
d) lors d'une étape requise en vue de l'extraction, relever des valeurs de paramètres *W̅_̅{̅X̅}̅*, et
e) appliquer une mesure de similarité entre les valeurs de paramètres *W_{X}* et *W̅_̅{̅X̅}̅* afin d'assurer l'identification ou le traçage ou de vérifier l'intégrité du réseau artificiel de neurones.

## Description

### Domaine technique

La présente invention a pour objet un procédé pour protéger par traçage un réseau artificiel de neurones, des dispositifs et des programmes d'ordinateur pour la mise en œuvre dudit procédé.

### Technique antérieure

En dépit de l'énorme quantité de recherches et d'applications induite par le grand succès des réseaux de neurones artificiels (RNA), et en particulier de l'apprentissage profond (AP), peu d'attention a été accordée aux aspects de traçage et de vérification d'intégrité des modèles qui y sont liés. De nos jours, les RNA sont devenus l'outil de prédilection pour aborder les problèmes d'apprentissage, supervisé ou non, à condition de pouvoir entraîner un modèle de neurones profond à l'aide d'un grand ensemble de données. L'AP a gagné en élan et en performance dans un nombre croissant de domaines allant notamment de la vision par ordinateur, du traitement de l'image, de l'audio et du langage naturel aux applications de santé.

L'omniprésence de l'AP dans l'industrie, la santé et d'autres systèmes critiques appelle à davantage d'efforts de recherche pour comprendre et analyser les aspects de sécurité et les vulnérabilités. Par exemple, dans [1], la vulnérabilité de l'AP aux modifications *adversariales* (parfois nommées *contradictoires* en français) est analysée. Un autre aspect qui doit être garanti dans les systèmes critiques de sécurité utilisant l'AP est que le modèle conçu ne soit pas modifié ou compromis, d'une façon malveillante ou non. Dans d'autres contextes, la protection par le droit d'auteur des modèles RNA doit être assurée, comme décrit dans [2], [3], où le tatouage des RNA pour tracer les droits de propriété des modèles entraînés est exploré.

Le tatouage d'objet, ou *watermarking* en anglais, est une technique répandue utilisée pour intégrer un signal, comme une image de tatouage, dans un objet, par exemple un billet de banque. Le tatouage numérique est l'application numérique du tatouage d'objet. Il est généralement réalisé en utilisant une fonction guidée par un signal à valeur binaire ou réelle, c'est-à-dire le tatouage, pour altérer certaines caractéristiques d'un objet numérique, comme les valeurs de pixels ou les coefficients de transformation pour les images, les échantillons pour les signaux unidimensionnels, les poids pour les réseaux de neurones, les coordonnées pour les modèles 3D. Le processus de tatouage est composé de deux phases, à savoir l'intégration, également nommé l'insertion, et l'extraction/vérification. La première stocke une chaîne de tatouage dans les caractéristiques de l'objet, éventuellement en utilisant une clé secrète pour protéger le tatouage contre les attaques, tandis que la seconde phase est réalisée à chaque fois qu'il est nécessaire de tester la présence du tatouage dans l'objet. En exploitant le tatouage, on peut renforcer la protection des droits d'auteur et de propriété, suivre l'origine, protéger l'intégrité et authentifier.

Si le tatouage numérique assure le traçage du contenu par une démarche active, c'est à dire, en modifiant le contenu, comme décrit ci-dessus, un intérêt croissant est identifié aujourd'hui quant au traçage passif, c'est à dire, sans modification du contenu à tracer, réalisé par la prise d'empreintes, ou *fingerprinting* en anglais. Le *fingerprinting,* lui aussi, comporte deux phases, à savoir l'extraction de l'empreinte et la détection de l'empreinte, cette deuxième étant également nommée l'appariement. Lors de la première phase, des données d'identification, appelées le *fingerprint* en anglais ou bien encore l'empreinte numérique, sont extraites à partir du modèle à tracer et stockées dans une base d'identification. Lors de la deuxième phase, le fingerprinting est extrait à partir d'un RNA ayant éventuellement subi des attaques et l'identité de ce RNA est établie par la comparaison avec les *fingerprintings* déjà enregistrés dans la base d'identification.

L'article [2] présente une méthode dans laquelle, pour insérer la marque, le processus d'apprentissage du réseau de neurones doit être modifié par rapport à la tâche, en ajoutant un terme de régularisation à la fonction de coût. La marque n'est ainsi pas insérée instantanément au début de l'entrainement, et son insertion impacte l'entrainement, notamment en termes de convergence, de coût et de temps d'exécution.

Dans [4], les valeurs de certains paramètres sont substituées par la marque à insérer et un terme de régularisation doit être introduit pour assurer la robustesse. L'environnement d'entrainement est donc également impacté.

Le brevet US 11 163 860 décrit une méthode pour vérifier la propriété intellectuelle des RNA utilisés pour la classification d'images, sans affecter l'exactitude du modèle pour les données d'entrée de la tâche originale. L'approche implique la génération d'un set d'images d'entrée (*trigger*) spécifiquement requis pour le tatouage : tous les éléments de ce set de données sont étiquetés d'une façon incorrecte, c'est à dire les étiquettes assignées pour le trigger sont volontairement fausses. Pendant l'intégration du tatouage, le RNA s'entraine à classifier les images de sa tâche ainsi que ceux de son sous-jeu d'entrée. Enfin, l'extraction de la marque s'effectue en boîte noire. Dans ce brevet, la vérification en boîte noire inclut l'émission d'une requête par des éléments du *trigger,* puis la détermination si la requête retourne les étiquettes prédéfinies.

Dans l'article [5], l'insertion a lieu sur le modèle entraîné, ce qui est très limitant.

### Exposé de l'invention

Il existe ainsi un besoin pour protéger efficacement un réseau artificiel de neurones, sans que son entrainement soit trop contraint ou que l'environnement de calcul soit trop impacté, notamment en termes de coût et de temps d'exécution.

L'invention vise à répondre à tout ou partie de ce besoin.

### Résumé de l'invention

L'invention porte sur un procédé pour protéger par traçage un réseau artificiel de neurones, ledit réseau comportant une pluralité de couches, comprenant chacune une pluralité de neurones, lesdits neurones comportant une pluralité de paramètres ayant chacun une valeur, le procédé comportant au moins les étapes suivantes :
a) sélectionner une sous-partie des paramètres dans au moins une ou plusieurs couches du réseau, notamment dans chacune des couches du réseau,
b) lors d'une étape requise pour le traçage du réseau, durant son entrainement, substituer la valeur des paramètres sélectionnés à l'étape a) par au moins une marque prédéterminée *W_{X}* pour marquer le réseau, ou
   relever les valeurs des paramètres sélectionnés afin de former une empreinte *W_{X}* pour réaliser l'empreinte numérique du réseau,
c) poursuivre l'entrainement du réseau indépendamment des modifications de l'étape b) effectuées en vue du traçage,
d) lors d'une étape requise en vue de l'extraction, relever des valeurs de paramètres *W̅_̅{̅X̅}̅,* et
e) appliquer une mesure de similarité entre les valeurs de paramètres *W_{X}* et *W̅_̅{̅X̅}̅* afin d'assurer l'identification ou le traçage ou de vérifier l'intégrité du réseau artificiel de neurones.

L'invention permet la préservation intégrale du processus d'entrainement imposé par la tâche, dans le sens où le tatouage ou la prise d'empreintes n'impose aucune contrainte à celui-ci, ces méthodes étant agnostiques de la tâche. Ainsi, les opérations mises en place en vue de l'insertion de la marque ou de l'extraction de l'empreinte n'impliquent aucun calcul, à part des écritures, lectures ou stockage. Les performances de la procédure de traçage sont indépendantes du processus d'apprentissage et de la topologie du réseau protégé, le procédé selon l'invention étant ainsi générique.

Selon l'invention, il est possible d'insérer ou d'extraire les informations de traçage à tout moment du processus d'entrainement, ce qui offre un procédé flexible. Pour le tatouage, l'insertion de la marque peut être effectuée lors de l'initialisation du processus d'entrainement, protégeant le modèle dès sa création.

Les méthodes de tatouage et de prise d'empreintes sont accommodées par le même cadre méthodologique.

L'invention offre une versatilité dans l'insertion selon le besoin et le nombre de marques insérées.

L'invention peut être utilisée pour tracer les droits de propriété intellectuelle. Par exemple, dans le cas du développement d'un modèle sur une tâche métier spécifique, l'invention pourrait permettre de prouver la modification du modèle par un tiers, par des ajustements fins, dits *fine-tuning* en anglais.

L'invention peut être utilisée pour identifier les contrefaçons de réseau de neurones.

L'invention peut être utilisée pour assurer la confiance des réseaux de neurones artificiels dans l'internet des objets. L'invention permet de prouver qu'un réseau a seulement subi des opérations autorisées et de détecter l'existence des opérations non-autorisées.

L'invention peut être utilisée pour assurer la confiance des réseaux de neurones artificiels dans l'apprentissage fédéré. Dans ce cas, différents appareils participent à l'entrainement sur des données locales pour réaliser l'entrainement d'un modèle de réseau de neurones. Le succès de cette approche s'appuie sur la confiance entre les nœuds fédérés. L'invention permet de détecter et de tracer un éventuel empoisonnement, malveillant ou non, de l'entrainement du réseau par l'un des nœuds fédérés.

De préférence, la sélection des paramètres est effectuée selon leur positionnement, c'est-à-dire leurs indices, et non selon leur valeurs.

L'étape b) de substitution est de préférence liée à une étape de tatouage dans laquelle la valeur des paramètres sélectionnés à l'étape a) est substituée par au moins une marque prédéterminée *W_{X}* pour marquer le réseau.

Dans une variante, l'étape b) de prélèvement est liée à une étape de prise d'empreintes dans laquelle les valeurs des paramètres sélectionnés sont relevées afin de former une empreinte *W_{X}* pour réaliser l'empreinte numérique, ou fingerprinting, du RNA.

Les marques et empreintes *W_{X}* sont de préférence des vecteurs, notamment multidimensionnels, tels que des matrices ou des tenseurs.

À l'étape a), les paramètres peuvent être sélectionnés en fonction de la topologie du réseau et de l'utilisation souhaitée du réseau de neurones. Utiliser des paramètres issus des couches d'entrée et de sortie est de préférence déconseillée.

La mesure de similarité de l'étape e) est de préférence une mesure basée sur la corrélation entre les valeurs de paramètres *W_{X}* et *W̅_̅{̅X̅}̅* , tel que le coefficient de Pearson : ${ρ}_{{W}_{X} , \overline{{W}_{X}}} = \frac{\frac{1}{\left|{W}_{X}\right|} {\sum }_{i = 0}^{\left|{W}_{X}\right|} \left({w}_{i}-{μ}_{{W}_{X}}\right) \left({\overline{w}}_{i}-{μ}_{\overline{{W}_{X}}}\right)}{\sqrt{\frac{1}{\left|{W}_{X}\right|} {\sum }_{i = 0}^{\left|{W}_{X}\right|} {\left({w}_{i}-{μ}_{{W}_{X}}\right)}^{2}} \sqrt{\frac{1}{\left|{W}_{X}\right|} {\sum }_{i = 0}^{\left|\overline{{W}_{X}}\right|} {\left({\overline{w}}_{i}-{μ}_{\overline{{W}_{X}}}\right)}^{2}}}$ où *wᵢ* est un élément quelconque de *W_{X}, w̅ᵢ* est l'élément correspondant dans *W̅_̅{̅X̅}̅,* |*W_{X}*| est le nombre d'éléments dans le vecteur *W_{X}* (égale au |*W_{X}*|, le nombre d'éléments dans *W_{X}*)*,* tandis que *µ* représente l'opération de moyenne, appliquée aux vecteurs *W_{X}* et *W̅_̅{̅X̅}̅.*

La mesure de similarité de l'étape e) peut également être une mesure de similarité visuelle, si les paramètres *W_{X}* correspondent à une image, comme la SSIM décrite dans l'article [6].

Dans un mode préféré de l'invention, plusieurs marques ou empreintes sont insérées ou relevées.

Les valeurs des paramètres peuvent être substituées ou relevées pour former le réseau marqué ou tracé lors de l'initialisation du réseau, au début de l'entrainement.

Dans une variante, la ou les valeurs des paramètres peuvent être substituées ou relevées pour former le réseau marqué ou tracé pendant l'entrainement du réseau à un ou plusieurs moments de l'entrainement choisis de manière prédéterminée ou aléatoire.

Lors de l'étape e), la mesure de similarité entre les valeurs de paramètres *W_{X}* et *W̅_̅{̅X̅}̅* obtenue est avantageusement comparée à au moins un seuil prédéterminé afin d'assurer l'identification ou le traçage ou de vérifier l'intégrité du réseau artificiel de neurones.

Les marques et/ou les empreintes sont de préférence associées à des clés secrètes.

L'invention porte encore, selon un autre de ses aspects, sur un dispositif pour protéger par traçage un réseau artificiel de neurones, ledit réseau comportant une pluralité de couches, comprenant chacune une pluralité de neurones, lesdits neurones comportant une pluralité de paramètre ayant chacun une valeur, le dispositif étant au moins configuré pour :
a) sélectionner une sous-partie des paramètres dans au moins certaines couches du réseau, notamment dans chacune des couches du réseau,
b) lors d'une étape requise pour le traçage du réseau, durant son entrainement, substituer la valeur des paramètres sélectionnés à l'étape a) par au moins une marque prédéterminée *W_{X}* pour marquer le réseau, ou
   relever les valeurs des paramètres sélectionnés afin de former une empreinte *W_{X}* pour réaliser l'empreinte numérique du réseau,
c) poursuivre l'entrainement du réseau indépendamment des modifications de l'étape b) effectuées en vue du traçage,
d) lors d'une étape requise en vue de l'extraction, relever des valeurs de paramètres *W̅_̅{̅X̅}̅,* et
e) appliquer une mesure de similarité entre les valeurs de paramètres *W_{X}* et *W̅_̅{̅X̅}̅* afin d'assurer l'identification ou le traçage ou de vérifier l'intégrité du réseau artificiel de neurones.

Les caractéristiques énoncées ci-dessus pour le procédé s'appliquent au dispositif et inversement.

L'invention porte encore, selon un autre de ses aspects, sur un produit programme d'ordinateur comportant un support et, enregistrées sur ce support, des instructions lisibles par un processeur pour que, lorsqu'exécutées, elles permettent de mettre en œuvre le procédé de protection par traçage d'un réseau artificiel de neurones selon l'invention.

Les caractéristiques énoncées ci-dessus pour le procédé s'appliquent au produit programme d'ordinateur et inversement.

### Brève description des dessins

L'invention pourra être mieux comprise à la lecture de la description qui va suivre, d'exemples non limitatifs de mise en œuvre de celle-ci, et à l'examen du dessin annexé, sur lequel :
[Fig 1] la figure 1 est un diagramme représentant des étapes mises en œuvre dans le procédé selon l'invention,
[Fig 2] la figure 2 représente trois histogrammes de la distance entre une marque insérée et récupérée à des itérations différentes,
[Fig 3] la figure 3 représente des courbes montrant l'évolution de la corrélation et de la perte pour cent itérations.

### Description détaillée

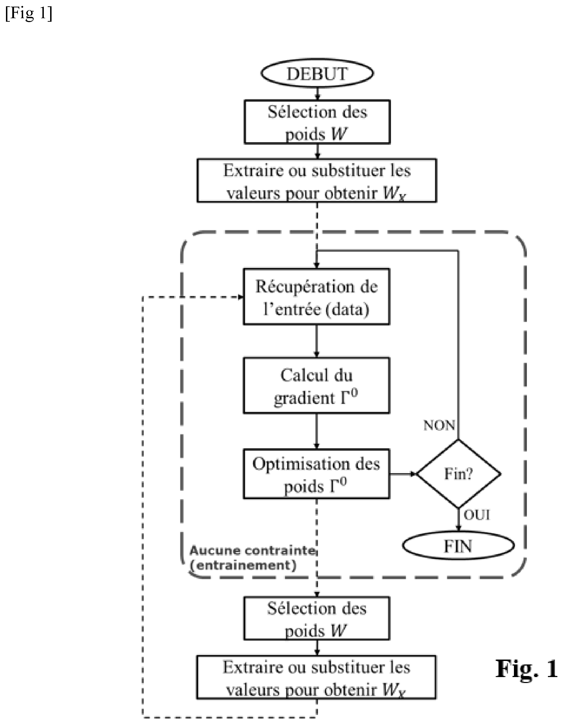

On a illustré à la figure 1 un exemple d'étapes mises en œuvre dans le procédé de protection d'un réseau artificiel de neurones selon l'invention. Ledit réseau comporte une pluralité de couches, comprenant chacune une pluralité de neurones, lesdits neurones comportant une pluralité de paramètres ayant chacun une valeur.

Dans une étape a), une sous-partie des paramètres est sélectionnée dans au moins une ou plusieurs couches du réseau, notamment dans chacune des couches du réseau.

Lors d'une étape b), requise pour le traçage du réseau et liée à une étape de tatouage, durant son entrainement, la valeur des paramètres sélectionnés à l'étape a) est substituée par au moins une marque prédéterminée *W_{X}* pour marquer le réseau. Dans une variante liée à une étape de prise d'empreintes, les valeurs des paramètres sélectionnés sont relevées afin de former une empreinte *W_{X}* pour tracer le réseau. De préférence, plusieurs marques ou empreintes sont insérées ou relevées. Les marques et/ou les empreintes sont avantageusement associées à des clés secrètes.

Dans une étape c), l'entrainement du réseau se poursuit indépendamment des modifications de l'étape b) effectuées en vue du traçage, comme représenté à la figure 1.

Lors d'une étape d) non représentée, requise en vue de l'extraction, des valeurs de paramètres *W̅_̅{̅X̅}̅* sont relevées. Dans une étape e), elle non plus non représentée en figure 1, une mesure de similarité est appliquée entre les valeurs de paramètres *W_{X}* et *W̅_̅{̅X̅}̅* afin d'assurer l'identification ou le traçage ou de vérifier l'intégrité du réseau artificiel de neurones.

De préférence et dans l'exemple considéré, à l'étape a), les paramètres sont sélectionnés en fonction de la topologie du réseau et de l'utilisation souhaitée du réseau de neurones. Utiliser des paramètres issus des couches d'entrée et de sortie est par exemple déconseillée.

Les valeurs des paramètres peuvent être substituées ou relevées pour former le réseau marqué ou tracé lors de l'initialisation du réseau, au début de l'entrainement. Dans une variante, la ou les valeurs des paramètres sont substituées ou relevées pour former le réseau marqué ou tracé pendant l'entrainement du réseau à un ou plusieurs moments de l'entrainement choisis de manière prédéterminée ou aléatoire.

De préférence et dans l'exemple considéré, la mesure de similarité de l'étape e) est une mesure basée sur la corrélation entre les valeurs de paramètres *W_{X}* et *W̅_̅{̅X̅}̅,* exprimée par le coefficient de Pearson, comme expliqué précédemment.

Lors de l'étape e), la mesure de similarité entre les valeurs de paramètres *W_{X}* et *W̅_̅{̅X̅}̅* obtenue est de préférence comparée à au moins un seuil prédéterminé afin d'assurer l'identification ou le traçage ou de vérifier l'intégrité du réseau artificiel de neurones.

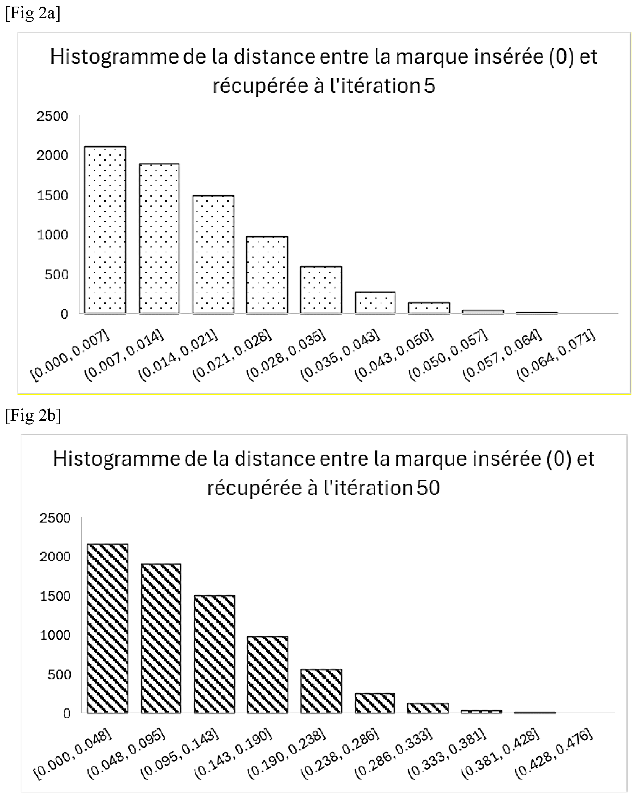

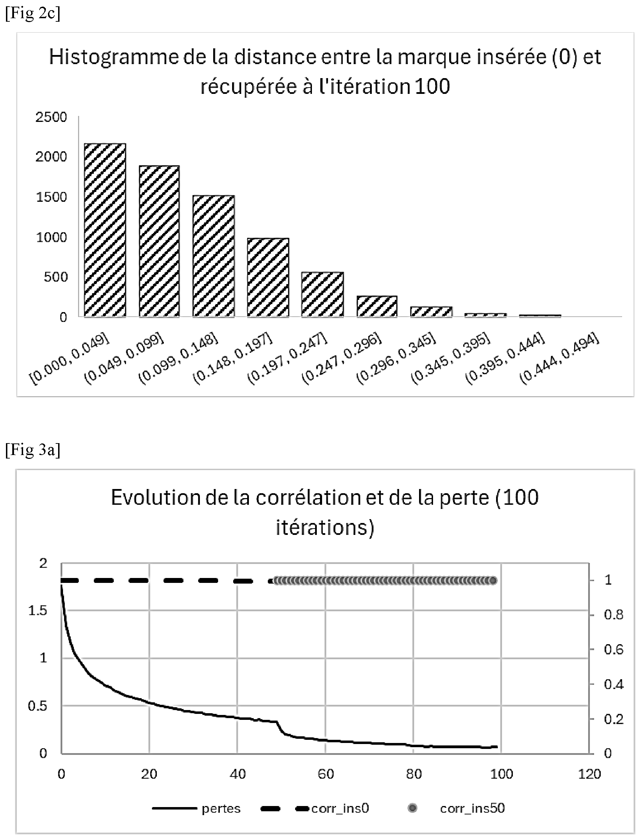

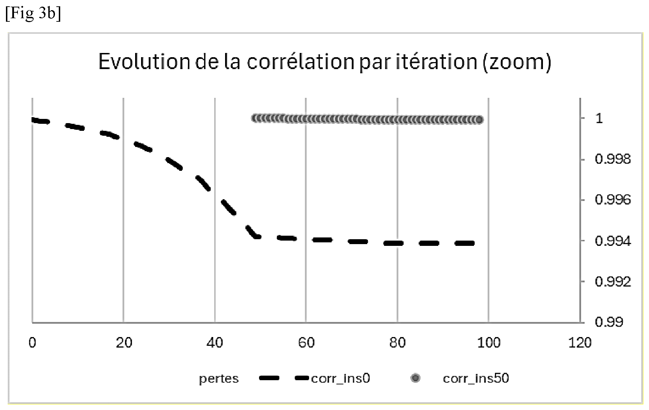

Les figures 2 et 3 illustrent un exemple de résultats obtenus en mettant en œuvre l'invention. Dans cet exemple, le réseau utilisé est le modèle ResNet18, la taille de la marque insérée est |W_{X}| = 7500, W_{X} ∈ [-0,2,0,2] et E, le nombre d'itérations de l'entrainement du réseau précédant l'insertion, égal à 0. Si |W_{X}| = 75 est considérée comme la taille minimale insérée dans les exemples considérés, |W_{X}| = 7500 correspond à une quantité d'information insérée (*payload* en anglais) de 100 bits.

La figure 2 représente des histogrammes de la distance en norme L1, c'est à dire la valeur absolue de la différence, entre la marque insérée et récupérée à différentes itérations du modèle : 5 pour la figure 2(a), 50 pour la figure 2(b) et 100 pour la figure 2(c).

Les courbes de la figure 3 montre l'évolution de la corrélation par itération, avec un zoom pour la figure 3(b). Le scénario le plus compliqué (E = 0) a une corrélation supérieure à 0,9. On remarque que les poids tatoués évoluent significativement mais que l'information de traçage peut toujours être extraite.

La robustesse du procédé selon l'invention a également été analysée pour le réseau ResNet18 avec une insertion également à l'initialisation (E = 0) et |*W_{X}* | ∈ {75, 7 500}. Les deux attaques considérées sont la quantification et l'élagage (*pruning* en anglais).

Les métriques utilisées sont le coefficient de corrélation de Pearson (PCC), qui correspond à un coefficient de corrélation qui mesure la corrélation linéaire entre deux ensembles de données, et l'erreur moyenne de test pour la classification de la base CIFAR10.

Les résultats obtenus sont synthétisés dans les deux tableaux ci-dessous.

**[Table 1]**

| **Quantiz ation** | **ResNet18 -** len(*W_{X}*) = 75 | | **ResNet18** - len(*W_{X}*) = 7500 | |
|---|---|---|---|---|
| | Pearson | CIFAR10 *err* | Pearson | CIFAR10 *err* |
| 16 | 0,998 | 8 | 0,997 | 8,17 |
| 8 | 0,998 | 8,16 | 0,997 | 8,07 |
| 6 | 0,998 | 8,05 | 0,997 | 8,44 |
| 4 | 0,996 | 11,66 | 0,997 | 16,72 |
| 2 | 0,964 | 87,13 | 0,989 | 90,04 |

**[Table 2]**

| **Élagage (*pruning*)** | **ResNet18** - len(*W_{X}*) = 75 | | **ResNet18** - len(*W_{X}*) = 7500 | |
|---|---|---|---|---|
| | Pearson | CIFAR10 *err* | Pearson | CIFAR10*err* |
| 10% | 0,998 | 8,13 | 0,997 | 8,16 |
| 50% | 0,998 | 10,69 | 0,997 | 10,74 |
| 80% | 0,998 | 32,04 | 0,996 | 42,81 |
| 90% | 0,998 | 71,53 | 0,985 | 73,57 |

Le procédé selon l'invention est donc robuste, la marque pouvant être récupérée.

Le tableau suivant montre les avantages du procédé selon l'invention par rapport à l'art antérieur.

**[Table 3]**

| | Propriété theorique | | | | Propriété fonctionnelle | | | |
|---|---|---|---|---|---|---|---|---|
| | Quantité dinformation multi-bit | Imperceptibilité | Robustesse | Complexité de calcul | Flexibilité | Scalabilité tinyML | Versatilité | Généricité |
| [Uchida17] | × | | | ? | ? | ? | × | |
| [Tartaglione21] | ? | | | × | ? | × | × | |
| [Botta21] | × 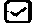 | 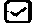 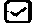 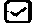 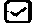 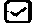 | 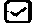 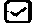 × 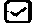 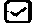 | 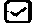 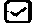 | × 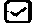 | ? 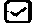 | × 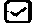 | 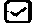 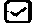 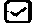 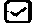 |
| [Zhang18] | X | | | ? | X | ? | × | × |
| invention | | | | | | | | |
| | | | | | | | | |

Dans le tableau ci-dessus, la flexibilité de l'opération de tatouage correspond à la possibilité d'insérer la marque à tout moment du processus de tatouage, permettant ainsi non-seulement la protection du RNA distribué mais également d'un RNA en cours d'entraînement. La « scalabilité tinyML » peut se définir comme la possibilité d'une même méthode de tatouage RNA de s'appliquer aussi bien en contexte déporté, comme un serveur *cloud* hautement performant, qu'en contexte embarqué, dans des structures contraintes en termes de ressources telles que la mémoire, l'énergie, ou la connectivité. La versatilité de traçage correspond à la possibilité d'un même cadre méthodologique de supporter le traçage des RNA par des méthodes de tatouage et fingerprinting, tandis que la généricité peut se définir comme la possibilité d'appliquer la méthode d'une façon indépendante par rapport à la tâche exécutée.

L'invention n'est pas limitée aux exemples qui viennent d'être décrits.

D'autres réseaux ou mesures de similarité peuvent notamment être utilisés.

### Références

[1] X. Yuan, P. He, Q. Zhu, and X. Li, "Adversarial examples: Attacks and defenses for deep learning," IEEE Transactions on Neural Networks and Learning Systems, vol. 30, no. 9, pp. 2805-2824, Sep. 2019
[2] Y. Uchida, Y. Nagai, S. Sakazawa, and S. Satoh, "Embedding watermarks into deep neural networks," in Proceedings of the 2017 ACM on International Conference on Multimedia Retrieval, ser. ICMR '17. New York, NY, USA: ACM, 2017, pp. 269-277.
[3] S. Sakazawa, E. Myodo, K. Tasaka, and H. Yanagihara, "Visual decoding of hidden watermark in trained deep neural network," in 2019 IEEE Conference on Multimedia Information Processing and Retrieval (MIPR), March 2019, pp. 371-374.
[4] E. Tartiglione, M. Grangetto, D. Cavagnino and M. Botta, "Delving in the loss landscape to embed robust watermarks into neural networks", in 2020 25th International Conference on Pattern Recognition (ICPR) Milan, Italy, Jan 10-15, 2021, pp. 1243-1250.
[5] M. Botta, D. Cavagnino and R. Esposito, "NeuNAC: A novel fragile watermarking algorithm for integrity protection of neural networks", in Information Sciences 576 (2021), pp. 228-241.
[6] Z. Wang, A. C. Bovik, H. R. Sheikh, and E. P. Simoncelli, "Image quality assessment: from error visibility to structural similarity," IEEE Trans. on Image Process., vol. 13, no. 4, pp. 600-612, Apr. 2004, doi: 10.1109/TIP.2003.819861.

## Revendications

1. Procédé pour protéger par traçage un réseau artificiel de neurones, mis en œuvre par ordinateur, ledit réseau comportant une pluralité de couches, comprenant chacune une pluralité de neurones, lesdits neurones comportant une pluralité de paramètres ayant chacun une valeur, le procédé comportant au moins les étapes suivantes :
a) sélectionner une sous-partie des paramètres dans au moins une ou plusieurs couches du réseau, notamment dans chacune des couches du réseau,
b) lors d'une étape requise pour le traçage du réseau, durant son entrainement, substituer la valeur des paramètres sélectionnés à l'étape a) par au moins une marque prédéterminée *W_{X}* pour marquer le réseau, ou
relever les valeurs des paramètres sélectionnés afin de former une empreinte *W_{X}* pour réaliser l'empreinte numérique du réseau,
c) poursuivre l'entrainement du réseau indépendamment des modifications de l'étape b) effectuées en vue du traçage,
d) lors d'une étape requise en vue de l'extraction, relever des valeurs de paramètres *W̅_̅{̅X̅}̅* et
e) appliquer une mesure de similarité entre les valeurs de paramètres *W_{X}* et *W̅_̅{̅X̅}̅* afin d'assurer l'identification ou le traçage ou de vérifier l'intégrité du réseau artificiel de neurones pour assurer sa confiance lors de son utilisation dans une tâche.

2. Procédé selon la revendication 1, dans lequel l'étape b) est liée à une étape de tatouage dans laquelle la valeur des paramètres sélectionnés à l'étape a) est substituée par au moins une marque prédéterminée *W_{X}* pour marquer le réseau.

3. Procédé selon la revendication 1, dans lequel l'étape b) est liée à une étape de prise d'empreintes dans laquelle les valeurs des paramètres sélectionnés sont relevées afin de former une empreinte *W_{X}* pour tracer le réseau.

4. Procédé selon l'une quelconque des revendications précédentes, dans lequel, à l'étape a), les paramètres sont sélectionnés en fonction de la topologie du réseau et de l'utilisation souhaitée du réseau de neurones.

5. Procédé selon l'une quelconque des revendications précédentes, dans lequel la mesure de similarité de l'étape e) est une mesure basée sur la corrélation entre les valeurs de paramètres *W_{X}* et *W̅_̅{̅X̅}̅.*

6. Procédé selon l'une quelconque des revendications 1 à 5, dans lequel plusieurs marques ou empreintes sont insérées ou relevées.

7. Procédé selon l'une quelconque des revendications précédentes, dans lequel les valeurs des paramètres sont substituées ou relevées pour former le réseau marqué ou tracé lors de l'initialisation du réseau, au début de l'entrainement.

8. Procédé selon l'une quelconque des revendications 1 à 6, dans lequel la ou les valeurs des paramètres sont substituées ou relevées pour former le réseau marqué ou tracé pendant l'entrainement du réseau à un ou plusieurs moments de l'entrainement choisis de manière prédéterminée ou aléatoire.

9. Procédé selon l'une quelconque des revendications précédentes, dans lequel, lors de l'étape e), la mesure de similarité entre les valeurs de paramètres *W_{X}* et *W̅_̅{̅X̅}̅* obtenue est comparée à au moins un seuil prédéterminé afin d'assurer l'identification ou le traçage ou de vérifier l'intégrité du réseau artificiel de neurones.

10. Procédé selon l'une quelconque des revendications précédentes, dans lequel les marques et/ou les empreintes sont associées à des clés secrètes.

11. Dispositif pour protéger par traçage un réseau artificiel de neurones, ledit réseau comportant une pluralité de couches, comprenant chacune une pluralité de neurones, lesdits neurones comportant une pluralité de paramètre ayant chacun une valeur, le dispositif étant au moins configuré pour :
a) sélectionner une sous-partie des paramètres dans au moins certaines couches du réseau, notamment dans chacune des couches du réseau,
b) lors d'une étape requise pour le traçage du réseau, durant son entrainement, substituer la valeur des paramètres sélectionnés à l'étape a) par au moins une marque prédéterminée *W_{X}* pour marquer le réseau, ou
relever les valeurs des paramètres sélectionnés afin de former une empreinte *W_{X}* pour réaliser l'empreinte numérique du réseau,
c) poursuivre l'entrainement du réseau indépendamment des modifications de l'étape b) effectuées en vue du traçage,
d) lors d'une étape requise en vue de l'extraction, relever des valeurs de paramètres *W̅_̅{̅X̅}̅*, et
e) appliquer une mesure de similarité entre les valeurs de paramètres *W_{X}* et *W̅_̅{̅X̅}̅* afin d'assurer l'identification ou le traçage ou de vérifier l'intégrité du réseau artificiel de neurones.

12. Produit programme d'ordinateur comportant un support et, enregistrées sur ce support, des instructions lisibles par un processeur pour que, lorsqu'exécutées, elles permettent de mettre en œuvre le procédé de protection d'un réseau artificiel de neurones selon l'une quelconque des revendications 1 à 10.
